# EUROPÄISCHE PATENTSCHRIFT

(11) **EP 0 877 190 B1**
(45) Veröffentlichungstag und Bekanntmachung des Hinweises auf die Patenterteilung: **11.07.2001**
(21) Anmeldenummer: 98108042.7
(22) Anmeldetag: 02.05.1998
(51) Int. Cl.: F16L 21/08, F16L 21/02, F16L 17/02, F16L 37/084, F16L 17/04

(54) **Rohrkupplung**
Pipe coupling
Raccord de tuyaux

(30) Priorität: 06.05.1997 DE 19719066
(43) Veröffentlichungstag der Anmeldung: 11.11.1998
(73) Patentinhaber: ALIA Engineering AG, 6300 Zug (CH)
(72) Erfinder: Wolfsdorf, Klaus D., 78588 Denkingen (DE)
(74) Vertreter: Sparing - Röhl - Henseler Patentanwälte

(56) Entgegenhaltungen:
- DE-A- 3 524 621
- US-A- 4 181 329
- US-A- 4 647 083
- US-A- 4 842 306

## Beschreibung

Die Erfindung betrifft eine Rohrkupplung nach dem Oberbegriff des Anspruchs 1.

Aus DE-C-3 524 621 ist eine derartige Rohrkupplung bekannt, bei der eine Hülse vorgesehen ist, die eine Lippendichtung aufnimmt, die zugleich einen innenseitigen, ringförmigen Anschlag für die Rohrenden von zwei einzuschiebenden Rohren aufweist. Zusätzlich und konstruktions-und montagemäßig getrennt hiervon ist eine äußere Schelle vorgesehen und mittels Werkzeug zu montieren, die als Stützkörper für Sicherungselemente dient, die sich bei Auszugsbeanspruchung eingesteckter Rohre in den jeweiligen eingesteckten Rohrenden unter radialer Aufrichtung verkrallen. Die Sicherungselemente besitzen hierbei eine komplizierte Form mit einem etwa ovalen Querschnitt und sind aufwendig zu montieren.

Außerdem ist aus DE-C-3 202 367 eine Rohrkupplung bekannt, die einen einstückigen, mit innen umlaufenden Nuten versehenen, zylindrischen Muffenkörper aufweist, wobei die Nuten einerseits O-Ringe und andererseits Sicherungselemente aufweisen. Letztere sind kreissegmentartig und auch ansonsten von relativ komplizierter Form, so daß sie über einen in die entsprechende Nut eingesetzten O-Ring gehalten werden können. Dies führt trotz der einstückigen Muffe zu einer auch in bezug auf Montage aufwendigen Konstruktion.

Aufgabe der Erfindung ist es, eine Rohrkupplung nach dem Oberbegriff des Anspruchs 1 zu schaffen, die eine vereinfachte und einteilige Konstruktion aufweist.

Diese Aufgabe wird entsprechend dem kennzeichnenden Teil des Anspruchs 1 gelöst.

Eine derartige Rohrkupplung ist einerseits ein einheitliches Bauteil und besitzt andererseits Sicherungselemente von einfacher Form, die eine einfache Montage, ebenso wie eine spätere Demontage ermöglichen.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

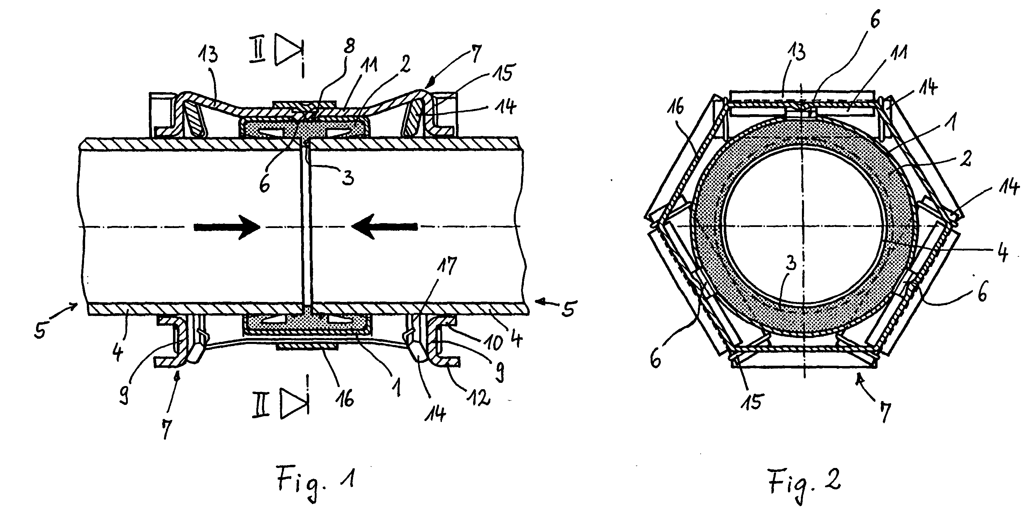

Fig. 1 zeigt eine Rohrkupplung im Axialschnitt.

Fig. 2 zeigt einen Radialschnitt der Rohrkupplung von Fig. 1 längs der Linie II-II.

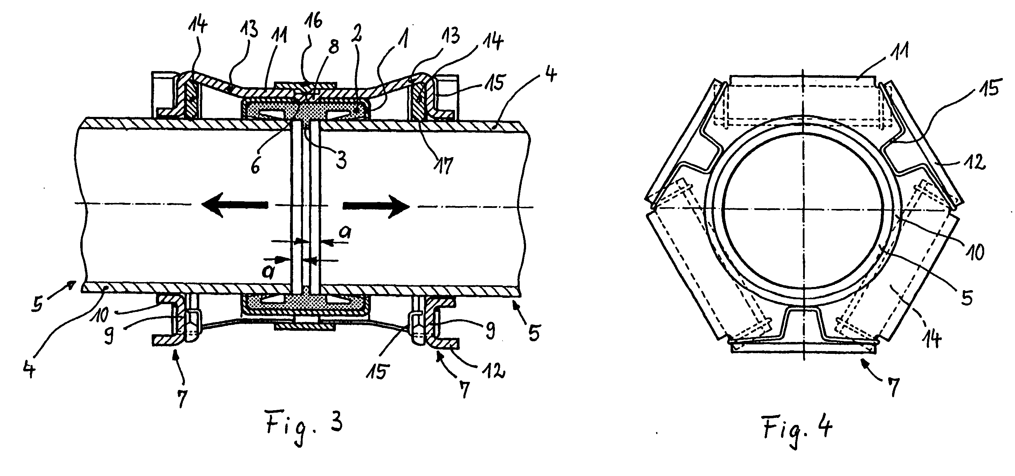

Fig. 3 und 4 zeigen die Rohrkupplung entsprechend Fig. 1 nach Druckbeaufschlagung bzw. in Stirnansicht.

Fig. 5 zeigt perspektivisch und teilweise aufgeschnitten die Rohrkupplung von Fig. 1, 2.

Die dargestellte Rohrkupplung umfaßt eine Hülse 1, deren Inneres eine Dichtungskammer bildet, die eine als Lippendichtring ausgebildete Dichtungsmanschette 2 aufnimmt. Die Dichtungsmanschette 2 ist mit einem sich hiervon radial einwärts erstreckenden, von Abstützschultern umgebenen Anschlagring 3 für zwei von der Rohrkupplung aufzunehmende Rohrenden 4 von zu verbindenden Rohren 5 versehen, wobei der Innendurchmesser des Anschlagrings 3 größer als der Innendurchmesser der Rohre 5 oder gleich diesem ist.

Die Hülse 1 ist in ihrem mittleren Bereich mit mehreren in Umfangsrichtung mit Abstand zueinander angeordneten rechteckigen Aussparungen 6 versehen, wobei beim vorliegenden Ausführungsbeispiel drei um 120° in Umfangsrichtung versetzte Aussparungen 6 vorgesehen sind.

Die Rohrkupplung umfaßt ferner zwei gleiche, spiegelbildlich zueinander angeordnete Stützkörper 7, die mit Nasen 8 versehen sind, die in die Aussparungen 6 eingreifen und so die Stützkörper 7 an der Hülse 1 halten.

Der jeweilige Stützkörper 7 ist vorzugsweise als Blechteil konzipiert und umfaßt (im vorliegenden Ausführungsbeispiel) eine außenumfänglich sechseckige, sich senkrecht zur Rohrachse erstreckende Radialwandung 9, die innenseitig einen ringförmigen, nach außen gerichteten Bund 10 besitzt und von deren Außenumfang drei Laschen 11 einwärts zur Hülse 1 hin umgebogen sind, die an ihren Enden die Nasen 8 tragen, während drei weitere Laschen 12, die sich mit den Laschen 11 abwechseln, axial nach außen gerichtet sind. Die Radialwandung 9 dient zur verbiegungsfreien Kraftaufnahme, während die Laschen 12 die Radialwandung 9 stabilisieren.

Die Laschen 11 besitzen zur Radialwandung 9 hin einen nach außen gerichteten, etwa kegeligen Anstiegsbereich 13. Benachbart zur Radialwandung 9 ist im Bereich zwischen dieser und den kegeligen Anstiegsbereichen 13 der Laschen 11 jeweils eine als Sicherungselement dienende, rechteckige, flache Spannplatte 14 eingesetzt. Die Spannplatten 14 werden durch Federn 15, aus Draht gebogene Formfedern, gehalten und in Auszugsrichtung vorgespannt. Hierbei hält jeweils eine Feder 15 zwei benachbarte Enden von zwei benachbarten Spannplatten 14 und stützt sich dabei an der jeweiligen zwischenliegenden, nach außen gerichteten Lasche 12 ab.

Die die Nasen 8 aufnehmenden Aussparungen 6 sorgen für eine drehgesicherte Ausrichtung der Stützkörper 7 in bezug auf die Hülse 1 sowie für deren Längsorientierung und nehmen die Axialkräfte der auseinanderstrebenden Rohre 5 auf. Ein umlaufendes Band 16, gegebenenfalls zweiteilig, verhindert dabei eine Auswanderung der Nasen 8 aus den Aussparungen 6.

Zur Montage der Rohrkupplung kann die Dichtungsmanschette 2 in die noch einseitig offene Hülse 1 eingelegt werden, die dann zugebördelt wird. Die Stützkörper 7 werden mit den Federn 15 versehen und die Spannplatten 14 positioniert. Danach wird zunächst ein Stützkörper 7 auf die Hülse 1 geschoben, das Band 16 bis zu dem durch die kegeligen Anstiegsbereiche 13 gebildeten Anschlag geschoben, der zweite Stützkörper 7 aufgeschoben und das Band 16 zentriert. Zur Montage der Rohrkupplung werden keine Spannschrauben benötigt.

Zum Verbinden zweier Rohre 5 sollten diese gerade abgeschnitten und gratfrei sein, um die Dichtungsmanschette 2 nicht zu beschädigen. Die Rohre 5 werden bis zum Anschlagring 3 in die Rohrkupplung eingeschoben. Hierbei weichen die Spannplatten 14 gegen die Federvorspannung aus. Werden nun die Rohre 5 mit Druck beaufschlagt oder wird eine sonstige Auszugskraft auf sie ausgeübt, fahren sie um ein Maß "a" auseinander, wobei sich die gehärteten Spannplatten 14 mit ihren an den dem Rohr 5 zugewandten Schneidkanten 17 in das jeweilige Rohrende 4 eindrükken. Hierbei können sich die Spannplatten 14 nur bis zur Radialwandung 9 des jeweiligen Stützkörpers 7 bewegen, die als Anschlag für die Spannplatten 14 dient. Durch das Eindrücken der Spannplatten 14 in das benachbarte Rohrende 4 können große Axialkräfte aufgenommen werden. Die Rohrmontage kann also ohne Werkzeug vorgenommen werden.

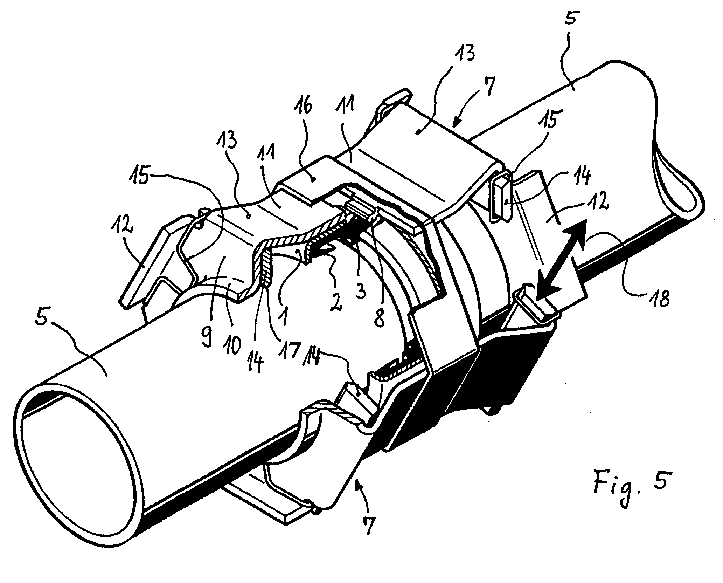

Da die unter den Laschen 11 seitlich herausragenden und dort von den Federn 15 gehaltenen Spannplatten 14 von außen zugänglich sind, können sie zum Lösen der Rohrkupplung mittels eines Werkzeugs herausgeschoben werden, wie durch den Pfeil 18 in Fig. 5 angedeutet ist.

Bei entsprechend geringen Anforderungen kann es gegebenenfalls ausreichen, wenn der Stützkörper 7 nur eine Spannplatte 14 aufnimmt. Er kann auch einen quadratischen Außenumfang besitzen und zwei Spannplatten 14 aufnehmen, oder einen achteckigen Außenumfang besitzen und vier Spannplatten 14 aufnehmen, etc.

Die Spannplatten 14 können in ihrem Längsverlauf konisch ausgebildet sein, um durch entsprechende Zustellung (Pfeilrichtung 18) auf größere Durchmesserunterschiede der aufzunehmenden Rohre 5 reagieren zu können.

## Patentansprüche

1. Rohrkupplung mit einer eine Dichtungskammer begrenzenden Hülse (1), die eine Dichtungsmanschette (2) aufnimmt und innerhalb eines Stützkörpers (7) angeordnet ist, der zumindest benachbart zu einer Seite der Hülses (1) wenigstens ein Sicherungselement für ein Ende (4) eines eingesteckbaren Rohrs (5) abstützt, wobei das Sicherungselement bei Auszugsbeanspruchung im Mantel des einsteckbaren Rohrendes (4) unter radialer Aufrichtung verkrallbar ist, dadurch **gekennzeichnet,** daß das Sicherungselement eine mittels am Stützkörper (7) sich abstützender Federn (15) in Auszugsrichtung vorgespannte, sich am Stützkörper (7) abstützende, rechteckige Spannplatte (14) ist, und daß der Stützkörper (7) an der Hülse (1) gehalten ist.

2. Rohrkupplung nach Anspruch 1, dadurch gekennzeichnet, daß der Stützkörper (7) über Nasen (8) an der Hülse (1) eingehakt ist.

3. Rohrkupplung nach Anspuch 1 oder 2, dadurch gekennzeichnet, daß der Stützkörper (7) über ein außenumfänglich hierzu angeordnetes Band (16) in Eingriff mit der Hülse (1) gehalten wird.

4. Rohrkupplung nach einem der Ansprüche 1 bis 3, dadurch gekennzeichnet, daß der Stützkörper (7) eine Radialwandung (9) senkrecht zur Rohrachse als Anschlag für die wenigstens eine Spannplatte (14) in Auszugsrichtung aufweist.

5. Rohrkupplung nach einem der Ansprüche 1 bis 4, dadurch gekennzeichnet, daß der Stützkörper (7) die Spannplatten (14) herausschiebbar aufnimmt.

6. Rohrkupplung nach einem der Ansprüche 1 bis 5, dadurch gekennzeichnet, daß der Stützkörper (7) abwechselnd bezüglich der Hülse (1) sich axial von diesem weg und sich axial zu diesem hin erstreckende Laschen (11, 12) aufweist, wobei die einen (11) die Spannplatten (14) und die anderen (12) die Federn (15) abstützen.

7. Rohrkupplung nach einem der Ansprüche 1 bis 6, dadurch gekennzeichnet, daß jeweils eine Feder (15) an zwei benachbarten Enden von zwei Spannplatten (14) angreift.

8. Rohrkupplung nach einem der Ansprüche 1 bis 7, dadurch gekennzeichnet, daß die Dichtungsmanschette (2) einen Anschlagring (3) für zwei von der Rohrkupplung aufzunehmende Rohre (5) aufweist, wobei der Innendurchmesser des Anschlagrings (3) größer als derjenige der Rohre (5) ist.

9. Rohrkupplung nach einem der Ansprüche 1 bis 8, dadurch gekennzeichnet, daß zwei Stützkörper (7) spiegelbildlich zueinander auf der Hülse (1) angeordnet sind.

10. Rohrkupplung nach einem der Ansprüche 1 bis 9, dadurch gekennzeichnet, daß die Spannplatte (14) in ihrem Längsverlauf konisch ausgebildet ist.

## Claims

1. Pipe coupling having a sleeve (1) that defines a sealing chamber, which sleeve (1) receives a sealing packing (2) and is arranged inside a support body (7) which, at least adjacent to one side of the sleeve (1), supports at least one securing element for an end (4) of an insertable pipe (5), the securing element digging, with radial orientation, into the wall of the insertable pipe end (4) in response to pulling-out stress, **characterised in that** the securing element is a rectangular clamping plate (14) which is supported on the support body (7) and is biased in the pulling-out direction by means of springs (15) supported on the support body (7), and the support body (7) is held against the sleeve (1).

2. Pipe coupling according to claim 1, characterised in that the support body (7) is hooked into the sleeve (1) by means of lugs (8).

3. Pipe coupling according to claim 1 or 2, characterised in that the support body (7) is held in engagement with the sleeve (1) by means of a strip (16) arranged around the outer circumference of the support body (7).

4. Pipe coupling according to any one of claims 1 to 3, characterised in that the support body (7) has a radial wall (9) perpendicular to the axis of the pipe as a stop in the pulling-out direction for the at least one clamping plate (14).

5. Pipe coupling according to any one of claims 1 to 4, characterised in that the support body (7) receives the clamping plates (14) in such a manner that they are ejectable.

6. Pipe coupling according to any one of claims 1 to 5, characterised in that the support body (7) has tabs (11, 12) extending alternately axially away from the sleeve (1) and axially towards the sleeve (1), the former (11) supporting the clamping plates (14) and the others (12) supporting the springs (15).

7. Pipe coupling according to any one of claims 1 to 6, characterised in that each spring (15) engages two adjacent ends of two clamping plates (14).

8. Pipe coupling according to any one of claims 1 to 7, characterised in that the sealing packing (2) has a stop ring (3) for two pipes (5) to be received by the pipe coupling, the internal diameter of the stop ring (3) being greater that that of the pipe (5).

9. Pipe coupling according to any one of claims 1 to 8, characterised in that two support bodies (7) are arranged mirror-image-wise relative to one another on the sleeve (1).

10. Pipe connection according to any one of claims 1 to 9, characterised in that the clamping plate (14) tapers conically along its length.

## Revendications

1. Raccord de tuyaux comprenant un manchon (1) qui délimite une chambre d'étanchéité, qui reçoit une garniture d'étanchéité (2) et qui est disposé à l'intérieur d'un corps d'appui (7), lequel supporte, au moins dans le voisinage d'un côté du manchon (1), au moins un élément d'arrêt pour une extrémité (4) d'un tuyau (5) pouvant être emmanché, dans lequel, en réponse à une sollicitation d'extraction, l'élément d'arrêt peut mordre dans la paroi de l'extrémité de tuyau (4) pouvant être emmanchée en même temps qu'il se redresse dans une direction radiale, caractérisé en ce que l'élément d'arrêt est une plaque de serrage rectangulaire (14), prenant appui contre le corps d'appui (7), précontrainte dans le sens de l'extraction au moyen de ressorts (15) qui prennent appui contre le corps d'appui (7), et en ce que le corps d'appui (7) est fixé au manchon (1).

2. Raccord de tuyaux selon la revendication 1, caractérisé en ce que le corps d'appui (7) est accroché au manchon (1) au moyen de dents (8).

3. Raccord de tuyaux selon la revendication 1 ou 2, caractérisé en ce que le corps d'appui (7) est maintenu en prise avec le manchon (1) au moyen d'un bandage (16) disposé selon la circonférence extérieure de ce dernier.

4. Raccord de tuyaux selon une des revendications 1 à 3, caractérisé en ce que le corps d'appui (7) présente une paroi radiale (9) perpendiculaire à l'axe du tuyau, qui sert de butée pour l'au moins une plaque de serrage (14) dans le sens de l'extraction.

5. Raccord de tuyaux selon une des revendications 1 à 4, caractérisé en ce que le corps d'appui (7) reçoit les plaques de serrage (14) d'une façon qui permet de les en séparer.

6. Raccord de tuyaux selon une des revendications 1 à 5, caractérisé en ce que le corps d'appui (7) présente des pattes (11, 12) qui s'étendent alternativement dans le sens s'éloignant axialement du manchon (1) et dans le sens se rapprochant axialement de ce manchon, les unes (11) donnant appui aux plaques de serrage (14) et les autres (12) donnant appui aux ressorts (15).

7. Raccord de tuyaux selon une des revendications 1 à 6, caractérisé en ce que chaque paire de deux extrémités adjacentes de deux plaques de serrage (14) est attaquée par un ressort (15).

8. Raccord de tuyaux selon une des revendications 1 à 7, caractérisé en ce que la garniture d'étanchéité (2) présente une bague de butée (3) pour deux tuyaux (5) qui doivent être reçus par le raccord de tuyaux, le diamètre intérieur de la bague de butée (3) étant plus grand que celui des tuyaux (5).

9. Raccord de tuyaux selon une des revendications 1 à 8, caractérisé en ce que deux corps d'appui (7) sont disposés sur le manchon (1) symétriquement l'un de l'autre.

10. Raccord de tuyaux selon une des revendications 1 à 9, caractérisé en ce que la plaque de serrage (14) est de configuration conique dans son profil longitudinal.
